Europäisches Patentamt

(19) European Patent Office

Office européen des brevets

(11) Publication number: **0 134 846**
**A1**

## EUROPEAN PATENT APPLICATION

(21) Application number: 83304354.0

(22) Date of filing: 27.07.83

(51) Int. Cl.⁴: **A 61 C 13/225**

(43) Date of publication of application:
27.03.85 Bulletin 85/13

(84) Designated Contracting States:
AT BE CH DE FR GB IT LI LU NL SE

(71) Applicant: **Re, Eugene L.**
**4316 West Broward Boulevard Suite 1**
**Plantation Florida 33317(US)**

(72) Inventor: **Re, Eugene L.**
**4316 West Broward Boulevard Suite 1**
**Plantation Florida 33317(US)**

(74) Representative: **Gordon, Michael Vincent et al,**
**GILL JENNINGS & EVERY 53-64 Chancery Lane**
**London WC2A 1HN(GB)**

(54) **Dentures.**

(57) A denture 10 releasably engages at least the terminal teeth 20, 32 of a series of consecutive natural remaining teeth 20, 22, 24, 26, 28, 30, 32 to hold the denture 10 in place in the user's mouth. The denture has a continuous lingual flange 14 and a buccal flange 16 which is interrupted adjacent at least one tooth such as teeth 24, 26, 28, 30. The denture is held in place by gasketed horseshoe-shaped clasping and sealing members 40, 42 extending generally anteriorly of the remaining portions 36, 38 of the buccal flange. The clasping and sealing members can be integral extensions of the denture base material. The denture is particularly adapted for users whose gum adjacent the natural teeth is substantially undercut.

FIG. 2

## DENTURES

The invention relates to dentures which utilize one or more remaining natural teeth in the upper or lower part of the user's mouth to locate and assist in securing the dentures.

The denture art has long known of clasping devices, usually a metal clasp with protruding ends which embrace an abutment tooth, to secure a denture in place. These conventional clasping devices are incapable of forming a seal with the abutment teeth they embrace. As a result, food can become lodged between the clasp and the tooth, causing decay and other problems. As well, metal clasps are likely to damage the abutment teeth and the tissue of a user's mouth, causing injury and pain.

More recently,dentures have been formed with gasketed apertures through which the anchoring teeth pass when the denture is inserted in the user's mouth. Such dentures and methods of making the same are described in U.S. Patent No. 3,716,918, issued to Tole, et al. on February 20, 1973.

Although the denture of the Tole patent represents a significant advance over the pre-existing art, there is still room for improvement in the device of the Tole patent. Sometimes the device of that patent can be difficult to insert in the user's mouth, particularly if the user's anterior teeth are intact. When numerous natural teeth remain in the user's mouth, the deviations of the surfaces of natural teeth and gums from a perpendicular orientation can prevent the Tole device from being seated successfully.

The device of Tole can also be significantly improved when the user's gums are substantially undercut, meaning that a gap remains between the buccal flange of the denture and the buccal surface of the corresponding natural gum when the denture is in place. Food can lodge in this gap. Also, air can enter between the denture and the user's mouth surfaces through this gap, destroying the suction which aids in securing the denture in place. It will be evident that the denture cannot be adapted to fill this undercut by building up the inner surface of the buccal flange of the denture, for that expedient would make the denture impossible to insert in the user's mouth.

A denture, in accordance with the present invention, for repetitive detachable engagement with at least the terminal teeth of a series of consecutive remaining natural teeth, includes buccal and lingual flanges depending from an artificial tooth anchoring portion thereof and is characterised in that: said buccal flange has first and second separated portions extending generally posteriorly of said terminal teeth so that a portion of the denture positioned adjacent at least one of said remaining natural teeth has no buccal flange; and horseshoe-shaped clasping and sealing members extend generally anteriorly from said first and second separated portions and releasably embrace the natural surfaces of at least said terminal teeth for securing and positioning the denture.

Surprisingly, even though the horseshoe-shaped clasping and sealing members do not encircle the abutment tooth or teeth and the buccal flange is not continuous, the denture still seats against the user's teeth and gums sufficiently to prevent air from entering under the denture and thus allow suction to assist in maintaining the denture in position.

Preferably, however, the horseshoe-shaped walls of the clasping members are integrally formed in the anterior ends of said first and second separated portions to embrace the neck portions of at least said terminal teeth, and a sealing member for each of said horseshoe-shaped walls comprises a partial gasket formed of elastomeric material, bonded to and substantially coextensive with each of said walls for forming a continuous line seal between said wall and the embraced portion of the terminal teeth, thereby anchoring the denture to said terminal teeth while preventing the entry of foreign matter between said walls and the embraced portions of said teeth.

A denture, in accordance with the present invention, will now be described, by way of example only, with reference to the accompanying drawings, in which:-

Figure 1 is a perspective view of a denture according to the present invention seated on a dental stone counterpart of the user's remaining natural teeth and gum;

Figure 2 is similar to Figure 1, but shows the denture and counterpart separated;

Figure 3 is a cross section taken along line 3-3 of Figure 1;

Figure 4 is a cross section taken along line 4-4 of Figure 1; and

Figure 5 is a cross section taken along line 5-5 of Figure 2, with a section through a prior art denture added in broken lines to show its position when seated in the user's mouth.

Although the disclosure hereof is detailed and exact to enable those skilled in the art to practice the invention, the physical embodiment herein disclosed merely exemplifies the invention which may be embodied in other specific structure. While the best known embodiment has been described, the details may be changed without departing from the invention, which is defined by the claims.

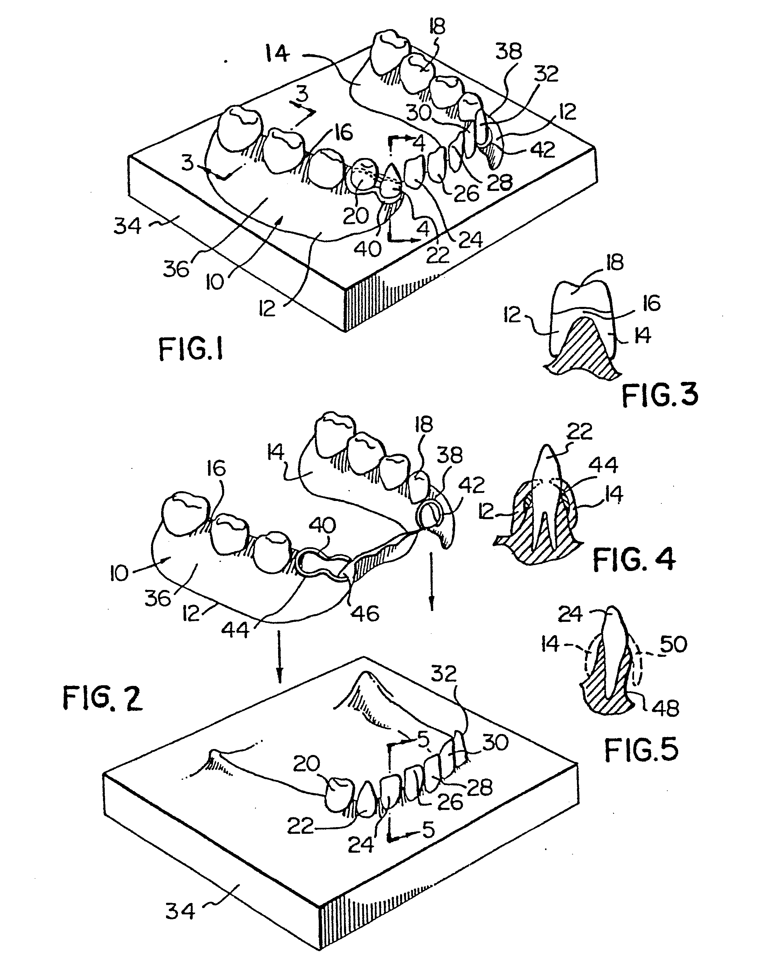

In the drawings, Figure 1 shows a denture 10 formed in the conventional manner from acrylic or other plastics material. The denture 10 has a buccal flange 12 and a lingual flange 14 which duplicate as nearly as possible the user's gums. Flanges 12 and 14 depend from an artificial tooth anchoring portion 16 to which are secured the several artificial teeth such as 18 which correspond to natural teeth the user lacks. In the embodiment of Figure 1, the wearer still has a series of consecutive remaining natural teeth -- 20, 22, 24, 26, 28, 30 and 32. Of these teeth, teeth 20 and 32 are the terminal teeth of a consecutive series. These teeth are reproduced in the dental stone counterpart 34, which also reproduces the wearer's natural gum.

Buccal flange 12 has first and second separated portions 36 and 38 which extend generally posteriorly of terminal teeth 20 and 32. The lingual flange of the denture, in contrast to the buccal flange, is substantially continuous along the entire dental arch.

The denture is secured to the abutment teeth by horseshoe-shaped clasping and sealing members 40 and 42. (As used herein, the term "horseshoe-shaped" denotes an open ended clasp which is so shaped as to embrace at least one tooth). Each clasping and sealing member is an integral extension of the rigid denture material having inner walls which closely conform to the contours of the embraced teeth. Each clasping and sealing member is lined with an elastomeric partial gasket such as 44 which can be formed substantially as taught in the Tole patent referenced above. The gasket 44 seats intimately against the neck portion of at least the terminal tooth of a consecutive series of at least three teeth. The gasket 44 is, in fact, bonded to and substantially coextensive with its corresponding member 40 or 42 to form a continuous line seal between said member and the embraced portion of the corresponding terminal tooth. This anchors the denture to the terminal teeth while preventing the entry of foreign matter between said members and the embraced portions of said teeth.

The open end 46 of each partial gasket 44 is provided in order to allow the denture to be seated in the user's mouth or on the dental stone counterpart even though the wearer has a series of consecutive remaining teeth.

Figure 2 illustrates that the clasping and sealing member can embrace a single tooth, as does clasping sealing member 42, or it may embrace two or more teeth, as does clasping and sealing member 40. But at least some of the centrally located teeth in the consecutive series, (here, teeth 24, 26,28,30 ) are not embraced by clasping and sealing members.

Figures 3 and 4 show the structure of the denture and counterpart of Figure 1 in more detail.

The reason for providing an interrupted buccal flange in the denture is shown in Figure 5, in which a denture according to the prior art is superimposed on a cross section of an anterior portion of the arch of the stone counterpart. As is frequently the case, the user's outer gum adjacent tooth 24 of Figure 5 has an undercut region 48 which allows foreign matter to accumulate between buccal flange 50 and the user's gum. This undercut region also allows air to infiltrate between the positioned denture and the base on which it rests in the user's mouth. Accumulations of material in the undercut region 48 can also cause the denture to be improperly seated. At the same time the prior art buccal flange portion 50 in front of the user's gum as shown in Figure 5 is sometimes visible when the patient opens his or her mouth, thus causing embarrassment.

It has been surprisingly found that the denture shown in Figures 1 through 4 provides a superior fit and thus allows the denture to form a substantially airtight seal in the user's mouth, despite the omitted portions of the buccal flange and the use of horseshoe-shaped elastomeric gaskets. The present invention thus provides a denture which seats more readily in the user's mouth,which seals substantially as well as the prior art denture,and yet which omits the bulky and otherwise objectionable anterior portion of the buccal flange.

CLAIMS

1.    A denture 10, for repetitive detachable engagement with at least the terminal teeth 20,32 of a series of consecutive remaining natural teeth 20,22,24,26,28,30,32, includes buccal 12 and lingual 14 flanges depending from an artificial tooth anchoring portion 16 thereof and is characterised in that: said buccal flange 12 has first 36 and second 38 separated portions extending generally posteriorly of said terminal teeth so that a portion of the denture 10 positioned adjacent at least one of said remaining natural teeth 24,26,28,30 has no buccal flange; and horseshoe-shaped clasping and sealing members 40,42 extend generally anteriorly from said first 36 and second 38 separated portions and releasably embrace the natural surfaces of at least said terminal teeth 20,32 for securing and positioning the denture 10.

2.    A denture according to claim 1, characterised in that each of said horseshoe-shaped clasping and sealing members 40,42 is an integrally formed anterior portion of one of said first 36 and second 38 separated portions, adapted to partially encircle and engage a neck portion of one of said terminal teeth 20,32 when the denture is in place in the user's mouth.

3.    A denture according to claim 2, characterised in that the tooth engaging portion of each of said horseshoe-shaped clasping and sealing members 40,42 includes a partial gasket 44 formed of elastomeric material.

4.    A denture according to claim 3, characterised in that the elastomeric material 44 is bonded to and substantially coextensive with each of said members 40,42 for forming a continuous line seal between said member and the embraced portion of the terminal teeth, thereby anchoring the denture to said terminal teeth 20,32 while preventing the entry of foreign matter between said member and the embraced portions of said teeth.

FIG.1

FIG.2

FIG.3

FIG. 4

FIG.5

European Patent Office

**EUROPEAN SEARCH REPORT**

0134846
Application number

EP 83 30 4354

## DOCUMENTS CONSIDERED TO BE RELEVANT

| Category | Citation of document with indication. where appropriate, of relevant passages | Relevant to claim | CLASSIFICATION OF THE APPLICATION (Int Cl. 3) |
|---|---|---|---|
| X | GB-A- 128 954 (ENGBERG) <br> * page 1, lines 33-39; figures * | 1,2 | A 61 C 13/22 |
| X | US-A-1 615 191 (HOOVER) <br> * Page 1, lines 54-62; figure 3 * | 1 | |
| A | | 2 | |
| A,D | US-A-3 716 918 (TOLE) <br> * Column 2, lines 45-51; figures * | 1-4 | |
| A | GB-A- 144 219 (DAVIS) <br> * Figure 1 * | 1 | |
| | ----- | | TECHNICAL FIELDS SEARCHED (Int. Cl. 3) |
| | | | A 61 C |

The present search report has been drawn up for all claims

| Place of search | Date of completion of the search | Examiner |
|---|---|---|
| THE HAGUE | 20-03-1984 | GLAS J. |